## Europäisches Patentamt

## European Patent Office

## Office européen des brevets

(11) Veröffentlichungsnummer: **0 106 796**
**B1**

(12) **EUROPÄISCHE PATENTSCHRIFT**

(45) Veröffentlichungstag der Patentschrift:
**14.01.87**

(21) Anmeldenummer: **83810403.2**

(22) Anmeldetag: **02.09.83**

(51) Int. Cl.⁴: **G 01 F 1/28,** F 16 K 51/00,
E 01 H 10/00

(54) **Elektromagnetisch steuerbares und kontrollierbares Sprühventil für Flüssigkeiten und Anlage mit derartigen Sprühventilen.**

(30) Priorität: **10.09.82 CH 5395/82**

(43) Veröffentlichungstag der Anmeldung:
**25.04.84 Patentblatt 84/17**

(45) Bekanntmachung des Hinweises auf die Patenterteilung:
**14.01.87 Patentblatt 87/3**

(84) Benannte Vertragsstaaten:
**DE FR GB SE**

(56) Entgegenhaltungen:
**CH-A-453 466**
**CH-A-497 610**
**DE-A-1 926 637**
**DE-A-2 849 974**
**DE-B-1 162 926**
**DE-B-2 218 685**
**FR-A-2 225 580**
**GB-A-2 073 893**

(73) Patentinhaber: **Boschung Mecatronic AG, Ried, CH-3185 Schmitten (CH)**

(72) Erfinder: **Boschung, Marcel, Ried, CH- 3185 Schmitten (CH)**
Erfinder: **Zehnder, Walter, Lampertshalten, CH-1713 St. Antoni (CH)**

(74) Vertreter: **Schweizer, Hans, Bovard AG Patentanwälte VSP Optingenstrasse 16, CH- 3000 Bern 25 (CH)**

**Beschreibung**

Die Erfindung betrifft eine Anlage zum Sprühen von einem flüssigen Taumittel auf eine Strassenfahrbahn gemäss dem Oberbegriff des Patentanspruches 1 (FR-A- 2 225 580).

In der CH-A-453 466 ist eine Fernsteuereinrichtung beschrieben, die sich zum selektiven Betätigen von einer grossen Anzahl, z.B. 1000, in Gruppen und Untergruppen angeordneten Elementen eignet, wozu ein Kabel mit drei Gruppen zu je fünf Adern benötigt wird. Die bekannte Fernsteuereinrichtung besitzt eine Steuerzentrale mit einer Anzahl Drucktasten, die ebenfalls in drei Gruppen angeordnet sind. Jede Drucktaste enthält zwei Kontakte, über welche bei Betätigung der Drucktaste je eine der genannten Adern mit dem positiven Anschluss und je eine andere dieser Adern mit dem negativen Anschluss einer Spannungsquelle verbunden werden. Zum Betätigen eines der Elemente ist es notwendig, je eine der Drucktasten der drei Gruppen zu drücken. Jeder Gruppe von den zu betätigenden Elementen ist eine Dekodierschaltung zugeordnet, die ein zwei Wicklungen aufweisendes Hauptrelais und für jedes zu betätigende Element je ein Hilfsrelais umfasst. Die eine Wicklung des Hauptrelais ist mit zwei Adern der ersten Gruppe des Kabels und die andere Wicklung mit zwei Adern der zweiten Gruppe des Kabels verbunden. Dies ermöglicht, durch Drücken von zwei Drucktasten, nämlich je eine der ersten und zweiten Gruppen der Drucktasten, jene Gruppe anzuwählen, in welcher sich das zu betätigende Element befindet. Das Hauptrelais besitzt sechs Arbeitskontakte, von denen fünf zum Durchschalten der fünf Adern der dritten Gruppe des Kabels auf die Hilfsrelais und eine zur Selbsthaltung des Hauptrelais dienen. Durch Drücken einer der Drucktasten der dritten Gruppe wird dann eines der Hilfsrelais erregt, welches dem zu betätigenden Element zugeordnet ist. Zur selben Zeit kann nur eines der Elemente betätigt werden und es erfolgt keine Rückmeldung, ob das betreffende Element betätigt worden ist oder nicht.

Es ist Aufgabe der Erfindung, eine Anlage zum Sprühen von einem flüssigen Taumittel auf eine Strassenfahrbahn zu schaffen, wobei eine Vielzahl von Sprühventilen mit einfachen Mitteln von einer Steuereinrichtung aus ferngesteuert werden können und eine Rückmeldung der Funktion der Sprühventile erfolgt.

Die erfindungsgemässe Anlage ist durch die im kennzeichnenden Teil des Patentanspruches 1 angeführten Merkmale gekennzeichnet.

Die Erfindung ist nachstehend mit Bezugnahme auf die Zeichnung beispielsweise näher erläutert. Es zeigen

Fig. 1 ein erstes Ausführungsbeispiel eines Sprühventils der erfindungsgemässen Anlage, teilweise im Schnitt,

Fig. 2 ein zweites Ausführungsbeispiel des Sprühventils, teilweise im Schnitt,

Fig. 3 ein drittes Ausführungsbeispiel des Sprühventils, teilweise im Schnitt,

Fig. 4 das Blockschema eines Ausführungsbeispieles der erfindungsgemässen Anlage, wobei jedem Sprühventil eine Steuerschaltung zugeordnet ist,

Fig. 5 das Schaltschema einer der Steuerschaltungen und

Fig. 6 das Blockschema einer Steuereinrichtung der Anlage nach Fig. 4.

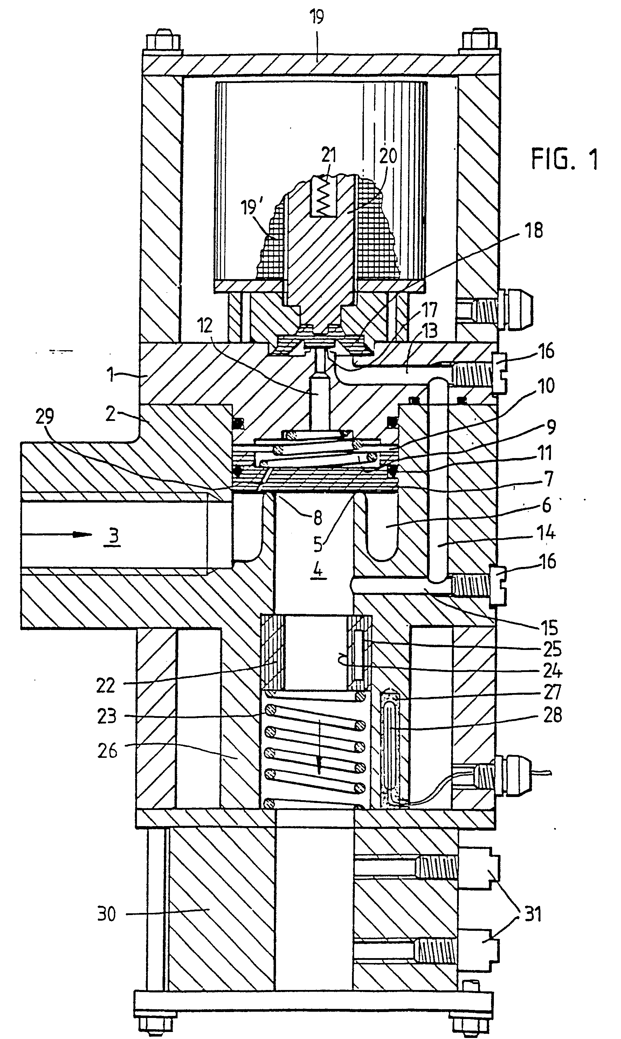

Die Fig. 1 zeigt eine erste Ausführungsform eines Sprühventils der erfindungsgemässen, Anlage, teilweise im Schnitt. Innerhalb eines aus zwei Teilen 1 und 2 bestehenden Gehäuses befindet sich ein Eingangskanal 3, ein Ausgangskanal 4 und ein eine Eintrittsöffnung 5 des Ausgangskanals 4 umgebender Ringraum 6, der mit dem Eingangskanal 3 in Verbindung steht. Im geschlossenen Zustand des Sprühventiles liegt ein Ventilteller 7 an einem bei der Eintrittsöffnung 5 angeordneten Ventilsitz 8 an. In dieser Stellung wird der Ventilteller 7 durch eine schwache konische Feder 9 gehalten.

Auf der der Eintrittsöffnung 5 des Ausgangskanals 4 abgewandten Seite des Ventiltellers 7 ist ein durch den Ventilteller 7 und den ersten Teil 1 des Gehäuses begrenzter Kolbenraum 10 vorhanden. Die Feder 9 ist in dem Kolbenraum 10 untergebracht. Der Ventilteller 7 ist innerhalb des Kolbenraumes 10 in achsialer Richtung verschiebbar. In einer längs des Umfanges des Ventiltellers 7 verlaufenden Nut 11 ist eine ringförmige Dichtung angeordnet. Der Kolbenraum 10 ist über einen Nebenkanal mit dem Ausgangskanal 4 verbindbar. Der Nebenkanal umfasst eine zentrale Bohrung 12 und eine radiale Bohrung 13 im ersten Teil 1 des Gehäuses sowie eine achsial verlaufende Bohrung 14 und eine radial verlaufende Bohrung 15 im zweiten Teil 2 des Gehäuses. Die äusseren Enden der radial verlaufenden Bohrungen 13 und 15 sind mit Verschlußschrauben 16 verschlossen. Im Nebenkanal ist ein aus einem Ventilsitz 17 und einem beweglichen elastischen Ventilteil 18 gebildetes Steuerventil angeordnet. Ueber dem ersten Teil 1 des Gehäuses befindet sich ein Elektromagnet 19, der eine Wicklung 19' und einen teilweise im Schnitt dargestellten Anker 20 aufweist, der beim Erregen der Wicklung entgegen der Wirkung einer Feder 21, bezogen auf die Fig. 1, nach oben bewegt wird. Dabei wird der elastische Ventilteil 18 von der zentralen Bohrung 12 abgehoben und der Kolbenraum 10 ist über den oben beschriebenen Nebenkanal mit dem Ausgangskanal 4 verbunden.

In einem erweiterten Teil des Ausgangskanales 4 ist ein hohlzylindrischer Körper 22 entgegen der Rückführkraft einer Feder 23 achsial verschiebbar gelagert. Die Querschnittsfläche der zentralen Aussparung 24 des Körpers 22 ist kleiner als die Querschnittsfläche des Ausgangskanales 4 vor dem Körper 22. Im ringförmigen Körper 22 ist ein Dauermagnet 25 eingebettet. In einer den erweiterten Teil des Ausgangskanals 4 umgebenden Gehäusewand 26 ist eine Sackbohrung 27 vorhanden, in welcher sich ein Schutzrohrkontakt 28 befindet. Der Schutzrohrkontakt 28 ist so in der Sackbohrung 27 befestigt, dass sein Kontakt offen ist, wenn sich der ringförmige Körper 22 in der in der Fig. 1 gezeichneten Stellung befindet, und geschlossen ist, wenn sich der Körper 22 aufgrund einer nachstehend beschriebenen Wirkung in der Nachbarschaft des Schutzrohrkontaktes 28 befindet.

Wenn der Eingangskanal 3 an eine in der Fig. 1 nicht dargestellte Leitung angeschlossen ist, die eine unter Druck stehende Flüssigkeit enthält, so füllt sich der Ringraum 6 mit der Flüssigkeit und über eine Bohrung 29 im Randbereich des Ventiltellers 7 fliesst die Flüssigkeit in den Kolbenraum 10 und in die zentrale Bohrung 12. Weil die zentrale Bohrung 12 durch den beweglichen elastischen Ventilteil 18 verschlossen ist, wird die Flüssigkeit in dem Kolbenraum 10 dem gleichen Druck ausgesetzt, wie die Flüssigkeit im Eingangskanal 3. Dies hat zur Folge, dass der Ventilteller 7 mit relativ grosser Kraft gegen den Ventilsitz 8 gepresst wird und dass dadurch das Sprühventil fest verschlossen ist.

Wird der Elektromagnet 19 erregt und dadurch der Anker 20 bezogen auf die Fig. 1 ein wenig nach oben bewegt, so gibt der elastische bewegliche Ventilteil 18 den Ventilsitz 17 frei, und die Flüssigkeit im Kolbenraum 10 strömt durch die zentrale Bohrung 12 und die achsiale Bohrung 13 des ersten Teiles 1 des Gehäuses und durch die achsiale Bohrung 14 und die radiale Bohrung 15 des zweiten Teiles 2 des Gehäuses in den Ausgangskanal 4. Die Flüssigkeit im Kolbenraum 10 kann abfliessen. Die durch die enge Bohrung 29 im Ventilteller 7 nachfliessende Flüssigkeit erleidet einen Druckabfall durch besagte Bohrung. Somit sinkt der Druck in dem Kolbenraum 10 ab und der Ventilteller 7 wird vom Ventilsitz 8 abgehoben, so dass die Flüssigkeit vom Ringraum 6 direkt in den Ausgangskanal 4 strömen kann.

Weil der Durchtrittsquerschnitt der zentralen Aussparung 24 des ringförmigen Körpers 22 kleiner ist als der Durchtrittsquerschnitt des Ausgangskanals 4, wird der Körper 22 entgegen der Wirkung der Feder 23 nach aussen bewegt, wodurch der Dauermagnet 25 in den Wirkbereich des Schutzrohrkontaktes 28 gelangt und dafür sorgt, dass der Kontakt geschlossen wird. Auf diese Weise wird angezeigt, dass die Flüssigkeit durch das geöffnete Sprühventil strömt.

Wird die Erregung des Elektromagneten 19 abgeschaltet, so stösst die Feder 21 den Anker 20 und damit den elastischen beweglichen Ventilteil 18 gegen den Ventilsitz 17, wodurch der oben erwähnte Nebenkanal verschlossen wird. Die Kolbenkammer 10 ist nunmehr nur noch über die Bohrung 29 im Randbereich des Ventiltellers 7 mit dem Eingangskanal 3 verbunden, wodurch sich wieder der im Eingangskanal 3 vorhandene Druck im Kolbenraum 10 aufbaut. Sobald dieser Druck erreicht ist, wird der Ventilteller 7 durch die Feder 9 in achsialer Richtung zum Ventilsitz 8 gepresst und damit das Sprühventil geschlossen. Nachdem der Ventilteller 7 wieder auf dem Ventilsitz 8 aufliegt, strömt keine Flüssigkeit mehr durch den Ausgangskanal 4 und der ringförmige Körper 22 wird durch die Feder 23 in die in der Fig. 1 dargestellte Lage zurückgedrängt. Dabei entfernt sich der Magnet 25 aus dem Wirkungsbereich des Schutzrohrkontaktes 28, wodurch dieser wieder öffnet, um anzuzeigen, dass keine Flüssigkeit mehr durch den Ausgangskanal 4 strömt.

Die Stirnseite des zweiten Teiles 2 des Gehäuses, welcher Teil den Ausgangskanal 4 umgibt, ist mit einem Sprühdüsenkopf 30 abgeschlossen, der zum gleichmässigen Besprühen einer Fläche mit einer Flüssigkeit mit mehreren Spröhdüsen 31 ausgerüstet ist. Der Sprühdüsenkopf 30 dient auch als Auflageschulter für die Feder 23.

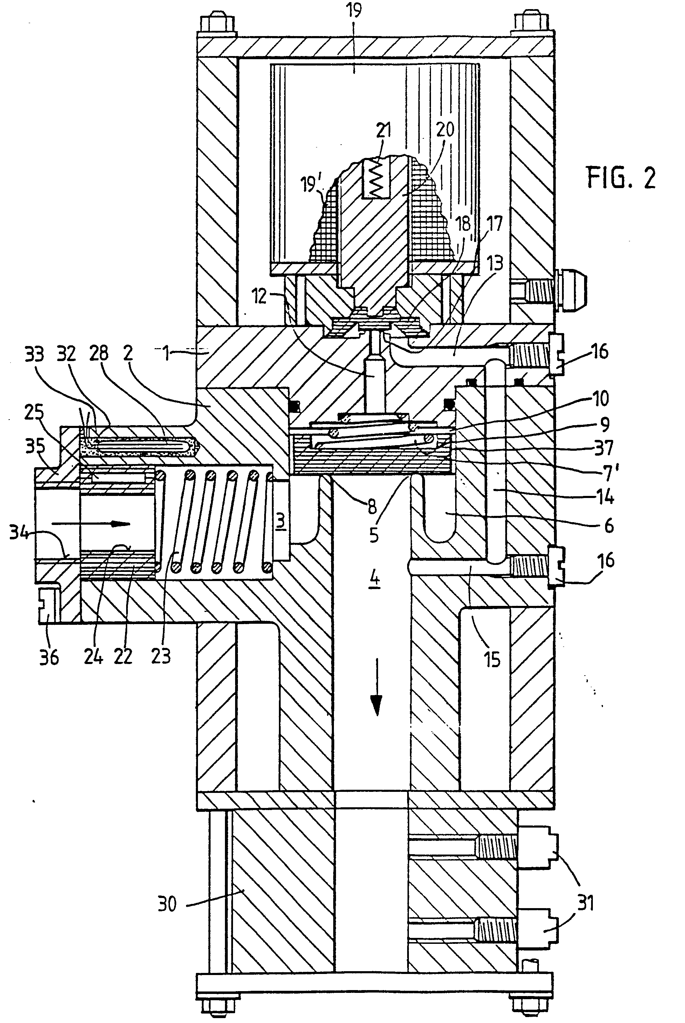

Die Fig. 2 zeigt ein zweites Ausführungsbeispiel des Spruhventils, teilweise im Schnitt. Jene Teile, die gleich ausgebildet sind und die gleichen Funktionen ausüben wie beim ersten Ausführungsbeispiel, sind mit den gleichen Bezugszeichen versehen wie in der Fig. 1. Das Ausführungsbeispiel nach der Fig. 2 unterscheidet sich gegenüber dem Ausführungsbeispiel gemäss der Fig. 1 dadurch, dass der ringförmige Körper 22 mit dem eingebetteten Dauermagnet 25 sich in einem erweiterten Teil des Eingangskanals 3 befindet. Dementsprechend ist der Schutzrohrkontakt 28 in einer Sackbohrung 32 in der Gehäusewand 33 des zweiten Teiles 2 des Gehäuses untergebracht. Ein mit einem Innengewinde 34 versehener Flansch 35 ist auf die Stirnseite des den Eingangskanal 3 umgebenden Teiles 2 des Gehäuses aufgesetzt und wird durch mehrere Schrauben 36, von denen in der Fig. 2 nur eine sichtbar ist, gehalten. Der Durchtrittsquerschnitt der zentralen Aussparung 24 des Körpers 22 ist kleiner als der Durchtrittsquerschnitt im Bereich des genannten Innengewindes 34 und des Eingangskanals 3, so dass bei geöffnetem Sprühventil der Körper 22 durch die Stromung der Flüssigkeit entgegen der Wirkung der Feder 23 nach innen verschoben wird, so dass der Dauermagnet 25 in den Wirkungsbereich des Schutzrohrkontaktes 28 gelangt und diesen schliesst.

Anstelle der Bohrung 29 im Randbereich besitzt der Ventilteller 7 wenigstens eine achsial verlaufende Nut 37 an seinem Umfang. Durch diese Nut 37 gelangt die Flüssigkeit vom Ringraum 6 in den Kolbenraum 10.

Im übrigen arbeitet das in der Fig. 2 dargestellte Ausführungsbeispiel gleich wie das in der Fig. 1 dargestellte Ausführungsbeispiel. Wenn beim geöffneten Sprühventil die Flüssigkeit durch dasselbe strömt, wird dies durch den Schutzrohrkontakt 28 angezeigt.

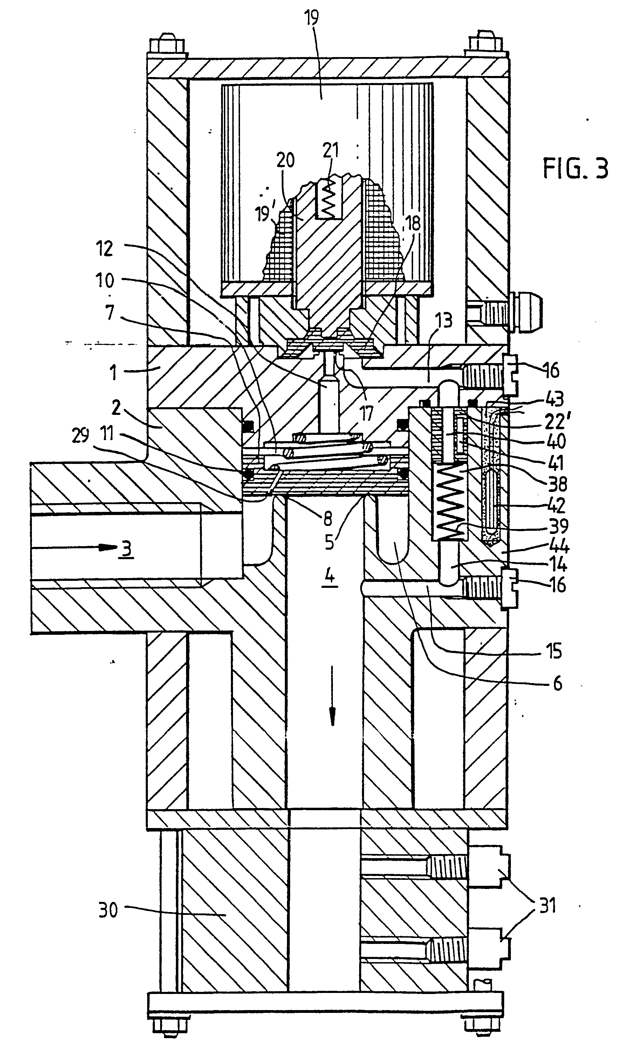

Das Ausführungsbeispiel gemäss der Fig. 3 unterscheidet sich gegenüber den beiden oben beschriebenen Ausführungsbeispielen dadurch, dass ein dem ringförmigen Körper 22 entsprechender ringförmiger Körper 22' in einem erweiterten Teil 38 der achsial verlaufenden Bohrung 14 im zweiten Teil 2 des Gehäuses angeordnet ist, welche Bohrung 14 ein Teil des Nebenkanales ist. Eine Feder 39 drückt den Körper 22' mit einer zentralen Aussparung 40 leicht gegen eine durch den ersten Teil 1 des Gehäuses gebildete Schulter. In der Mantelwand des Körpers 22' ist ein Dauermagnet 41 eingebettet, der mit einem Schutzrohrkontakt 42 zusammenarbeitet. Der Schutzrohrkontakt 42 ist in einer Sackbohrung 43 in der den erweiterten Teil 38 der Bohrung 14 umgebenden Gehäusewandung 44 untergebracht.

Der Durchtrittsquerschnitt der zentralen Aussparung 40 ist grösser als der Durchtrittsquerschnitt der Bohrung 29 im Randbereich des Ventiltellers 7 und kleiner als der Durchtrittsquerschnitt der Bohrung 14.

In der in der Fig. 3 gezeigten geschlossenen Stellung des Sprühventils ist der Schutzrohrkontakt 42 offen. Wenn der Elektromagnet 19 erregt wird, so hebt sich der bewegliche Ventilteil 18 vom Ventilsitz 17 ab und die in dem Kolbenraum 10 befindliche Flüssigkeit stromt durch den oben genannten Nebenkanal in den Ausgangskanal 4. Dabei wird der Körper 22' mit dem Dauermagnet 41 bezogen auf die Fig. 3 nach unten bewegt, wodurch der Dauermagnet 41 in den Wirkungsbereich des Schutzrohrkontaktes 42 gelangt, so dass der Schutzrohrkontakt 42 schliesst, um anzuzeigen, dass das Sprühventil geöffnet ist.

Durch das Abschalten der Erregung des Elektromagneten 19 wird das durch den beweglichen Ventilteil 18 und den Ventilsitz 17 gebildete Steuerventil im Nebenkanal geschlossen und der Körper 22' kehrt in die in der Fig. 3 gezeichnete Stellung zurück. Dies bewirkt, dass der Schutzrohrkontakt 42 wieder öffnet.

Bei den oben beschriebenen Sprühventilen wird mittels des eingebauten Schutzrohrkontaktes 28 bzw. 42 angezeigt, ob sich das Sprühventil im geschlossenen Zustand befindet oder ob das geöffnete Sprühventil von der Flüssigkeit durchströmt wird.

Die Körper 22 bzw. 22' und zumindest der zweite Teil 2 des Gehäuses sind aus nicht ferromagnetischem Material, z.B. Leichtmetall oder Kunststoff, hergestellt. Die Federn 23 bzw. 39 können aus Federbronze hergestellt sein.

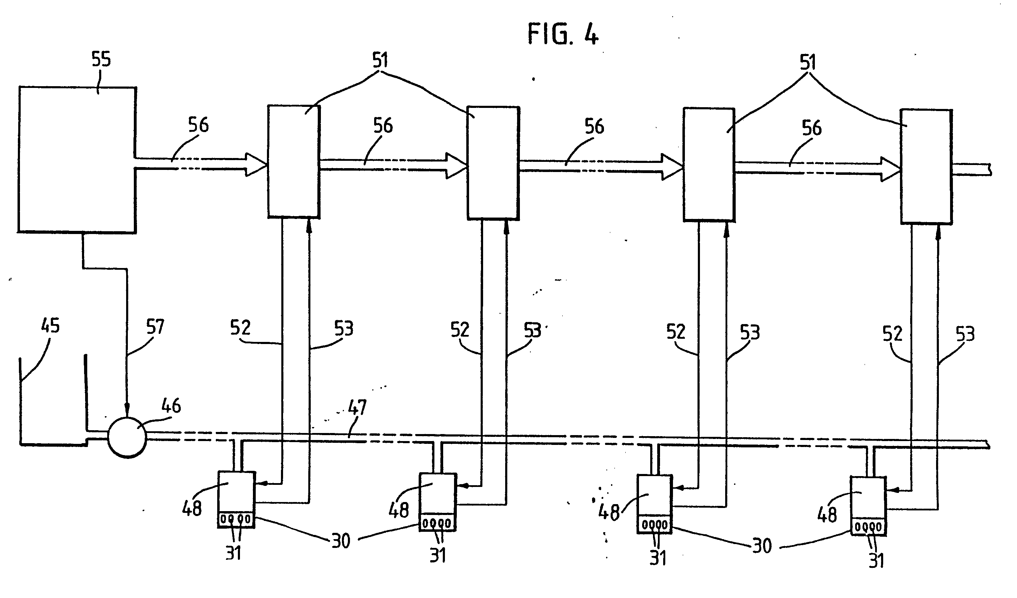

Die Fig. 4 zeigt die schematische Darstellung einer Anlage zum Sprühen eines flüssigen Taumittels auf eine Strassenfahrbahn. Von einem Vorratsbehälter 45 für das Taumittel wird mit einer Pumpe 46 das Taumittel in eine längs der nicht dargestellten Strassenfahrbahn verlegten Druckleitung 47 gepumpt. In Abständen von 5 bis 15 m sind im Randbereich der Strassenfahrbahn fernsteuerbare Sprühventile 48, z.B. der oben beschriebenen Art, angeordnet. Die Eingangskanäle dieser Sprühventile 48 sind an die Druckleitung 47 angeschlossen, und an die Ausgangskanäle der Sprühventile 48 sind Sprühdüsenköpfe 30 mit mehreren Sprühdüsen 31 angeschlossen.

Jedem Sprühventil 48 ist je eine Steuerschaltung 51 zugeordnet. Ueber Steuerleiter 52 wird die Wicklung des Elektromagneten des zugeordneten Sprühventils 48 erregt, wenn das betreffende Sprühventil 48 geöffnet werden soll. Ueber Rückmeldeleiter 53 ist der Rückmeldekontakt 54 des Sprühventils mit der Steuerschaltung verbunden, so dass eine Rückmeldung erfolgt, wenn flüssiges Taumittel aus der Druckleitung 47 über das Sprühventil 48 zum Sprühdüsenkopf 30 strömt.

Eine Steuereinrichtung 55 ist über einem Abschnitt eines Steuerkabels 56 mit der benachbarten Steuerschaltung 51 verbunden und je zwei benachbarte Steuerschaltungen sind über je einen weiteren Abschnitt des Steuerkabels 56 miteinander verbunden. Obwohl in der Fig. 4 nur vier Steuerschaltungen 51 und nur vier Sprühventile 48 dargestellt sind, umfasst die Anlage eine Vielzahl von Steuerschaltungen 51 und Sprühventilen 48.

Die Steuereinrichtung 55 schaltet über Leiter 57 im Bedarfsfall die Pumpe 46 ein und öffnet über das Steuerkabel 56 und die Steuerschaltungen 51 der Reihe nach nur je eines der Sprühventile 48. Durch diese Art der Steuerung kann die Pumpe 46 und die Druckleitung 47 nur für den Betrieb von einem einzigen der Sprühventile 48 bzw. Sprühdüsenköpfe 30 ausgelegt werden.

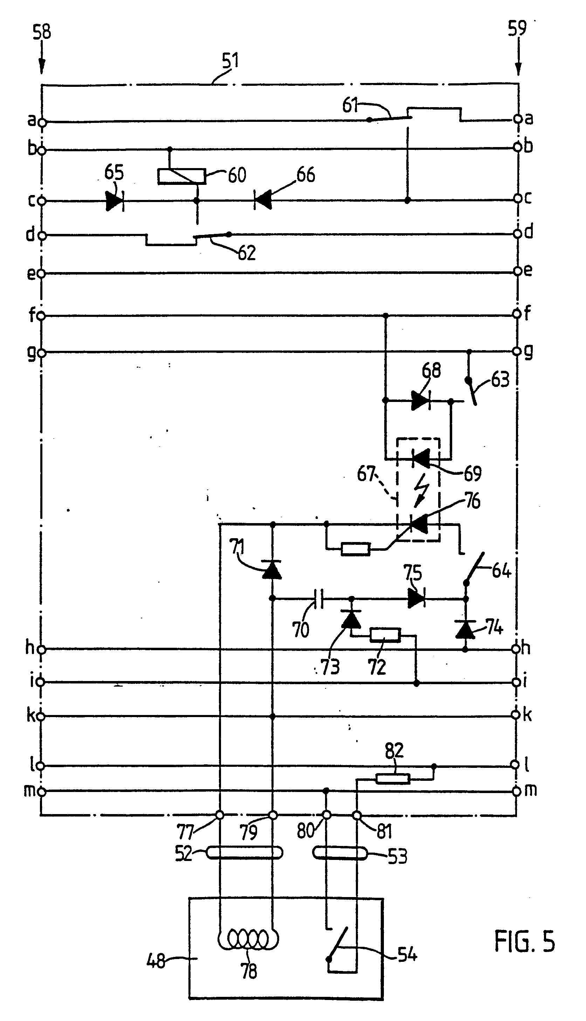

Die Fig. 5 zeigt das Schaltschema einer der Steuerschaltungen 51 mit den Anschlüssen des zugeordneten Sprühventiles 48. Die Steuerschaltung 51 besitzt zwölf Eingangsklemmen 58 und zwölf Ausgangsklemmen 59 für den Anschluss der zwölf Adern umfassenden Steuerkabel 56. Weiter ist ein Relais 60 vorhanden, das zwei Umschaltkontakte 61 und 62 sowie zwei Arbeitskontakte 63 und 64 aufweist. Die Eingangsklemme 58a ist mit dem beweglichen Teil des Umschaltkontaktes 61 und die Ausgangsklemme 59a ist mit dem festen Kontaktteil des Umschaltkontaktes 61 verbunden, der in der Ruhestellung des Relais 60 in elektrischer Verbindung mit dem beweglichen Kontaktteil steht. Die Eingangsklemme 58b ist direkt mit der Ausgangsklemme 59b sowie mit dem einen Anschluss des Relais 60 verbunden. Die Eingangsklemme 58c ist über die Reihenschaltung von zwei Dioden 65 und 66 mit der Ausgangsklemme 59c verbunden. Die letztere ist an den anderen festen Kontaktteil des Umschaltkontaktes 61 angeschlossen. Die miteinander verbundenen Kathoden der Dioden 65 und 66 sind mit dem anderen Anschluss des Relais 60 verbunden. Die Anschlussklemme 58d ist im Ruhezustand des Relais 60 über dessen Umschaltkontakt 62 mit der Ausgangsklemme 59d verbunden. Der in der Ruhestellung des Relais 60 offene feste Kontaktteil des Umschalters 62 ist mit dem anderen Anschluss des Relais 60 sowie mit den Kathoden der Dioden 65 und 66 verbunden. Die Eingangsklemme 58e ist direkt mit der Ausgangsklemme 59e verbunden.

Durch das Hintereinanderschalten einer Anzahl Steuerschaltungen 51, wobei jeweils die Ausgangsklemmen 59a bis 59e über das Steuerkabel 56 mit den Eingangsklemmen 58a bis 58e der folgenden Steuerschaltung 58 verbunden werden, entsteht eine aus den Relais 60 gebildete Zählrelaiskette, wenn die Eingangsklemmen 58c und 58d der ersten Steuerschaltung 51 miteinander und die Ausgangsklemmen 59d und 59e der letzten Steuerschaltung 51 miteinander verbunden werden.

Die Eingangsklemme 58b der ersten Steuerschaltung ist an den negativen Anschluss einer Spannungsquelle 85 in der Steuereinrichtung 55 angeschlossen. Die Eingangsklemme 58e der ersten Steuerschaltung 51 ist mit dem anderen Anschluss der genannten Spannungsquelle 85 verbindbar und der Eingangsklemme 58a werden positive Impulse zum Auswählen der einzelnen Steuerschaltungen 51 zugeführt.

Die Eingangsklemme 58f ist direkt mit der Ausgangsklemme 59f und mit dem einen Anschluss eines Optokopplers 67 verbunden. Die Eingangsklemme 58g ist mit der Ausgangsklemme 59g sowie über den Arbeitskontakt 62 des Relais 60 mit dem anderen Anschluss des Optokopplers 67 verbunden. Parallel zu den beiden genannten Anschlüssen des Optokopplers 67 ist eine Diode 68 zum Schutze der Leuchtdiode 69 des Optokopplers geschaltet. Die Eingangsklemme 58k ist mit der Ausgangsklemme 59k, dem negativen Anschluss eines Elektrolytkondensators 70 und der Anode einer Diode 71 verbunden. Die Eingangsklemme 58i ist mit der Ausgangsklemme 59 i und über einen Widerstand 72 und eine Diode 73 mit dem positiven Anschluss des Elektrolytkondensators 70 verbunden. Ueber den Widerstand 72 und die Diode 73 wird der Kondensator 70 im Ruhezustand der Anlage aufgeladen. Die Eingangsklemme 58h ist mit der Ausgangsklemme 59h sowie mit der Anode einer Diode 74 verbunden. Die Kathode der Diode 74 ist an den Arbeitskontakt 64 des Relais 60 angeschlossen, der auch über eine Diode 75 mit dem positiven Anschluss des Elektrolytkondensators 70 verbunden ist. Die andere Seite des Arbeitskontaktes 64 ist über ein Empfangselement 76, z. B. ein Photothyristor, des Optokopplers 67, eine Ausgangsklemme 77 und der Leitung 52 an den einen Anschluss der Wicklung 78 des Elektromagneten des Sprühventils 48 angeschlossen. Der andere Anschluss der Wicklung 78 ist über die Leitung 52 und eine Ausgangsklemme 79 mit der Eingangsklemme 58k und der Ausgangsklemme 59k verbunden.

Wenn das Relais 60 erregt wird und dementsprechend die Arbeitskontakte 63 und 64 geschlossen werden, so wird einerseits die Anode der Leuchtdiode 69 über den Arbeitskontakt 63 mit der Eingangsklemme 58g verbunden und andererseits der positive Anschluss des aufgeladenen Elektrolytkondensators 70 über die Diode 75 und den geschlossenen Arbeitskontakt 64 an den Photothyristor 76 angelegt. Wenn danach durch die Steuereinrichtung 55 eine Spannung an die Eingangsklemmen 58f und 58g angelegt wird, beleuchtet die Leuchtdiode 69 den Photothyristor 76 und dieser wird leitend. Dies bewirkt, dass sich der Elektrolytkondensator 70 über die Diode 75, den geschlossenen Arbeitskontakt 64, den leitenden Photothyristor 76 und die Wicklung 78 entlädt, so dass der Elektromagnet des Sprühventils 48 erregt wird und das Sprühventil öffnet.

Der aufgeladene Elektrolytkondensator 70 liefert kurzzeitig den für den Anzug des weiter oben mit Bezug auf die Fig. 1 beschriebenen Ankers 20 des Elektromagneten 19 notwendigen starken Stromstoss. Der zum Halten des Ankers 20 im angezogenen Zustand notwendige Haltestrom wird der Wicklung 78 über die Eingangsklemme 58i der Steuerschaltung 51, die Diode 74 und den leitenden Photothyristor 76 zugeführt. Der Eingangsklemme 58h wird von der Steuereinrichtung 55 eine Ladespannung zugeführt, die über den Widerstand 72 und die Diode 73 an den Kondensator 70 angelegt wird, um diesen nach der durch das Abfallen des Relais 60 eingeleitete Entregung des Elektromagneten des Sprühventiles 48 wieder aufzuladen.

Schliesslich sind die Eingangsklemmen 58l und 58m mit den Ausgangsklemmen 59l bzw. 59m sowie über Ausgangsklemmen 80 bzw. 81 und die Leitung 53 mit dem durch die oben beschriebenen Schutzrohrkontakte gebildeten Rückmeldekontakt 54 verbunden. Die Verbindung zwischen den Eingangsklemmen 58l, 58m und den Ausgangsklemmen 59l, 59m und die entsprechenden zwei Adern des Steuerkabels 56 bilden eine Rückmeldeleitung von den Steuerschaltungen 51 zur Steuereinrichtung 55, welche Rückmeldeleitung der Steuereinrichtung 55 zurücksignalisiert, wenn durch das Oeffnen des Sprühventiles 48 tatsächlich das Taumittel durch das Sprühventil 48 strömt. Die Ausgangsklemme 81 ist über einen Vorwiderstand 82 mit der Eingangsklemme 58l verbunden. Die Grösse des Vorwiderstandes 82 weist für jede der Steuerschaltungen 51 einen charakteristischen zugeordneten Wert auf. Mit einer entsprechenden Detektorschaltung 91 in der Steuereinrichtung 55 kann dann festgestellt werden, welches der Sprühventile 48 nicht korrekt arbeitet.

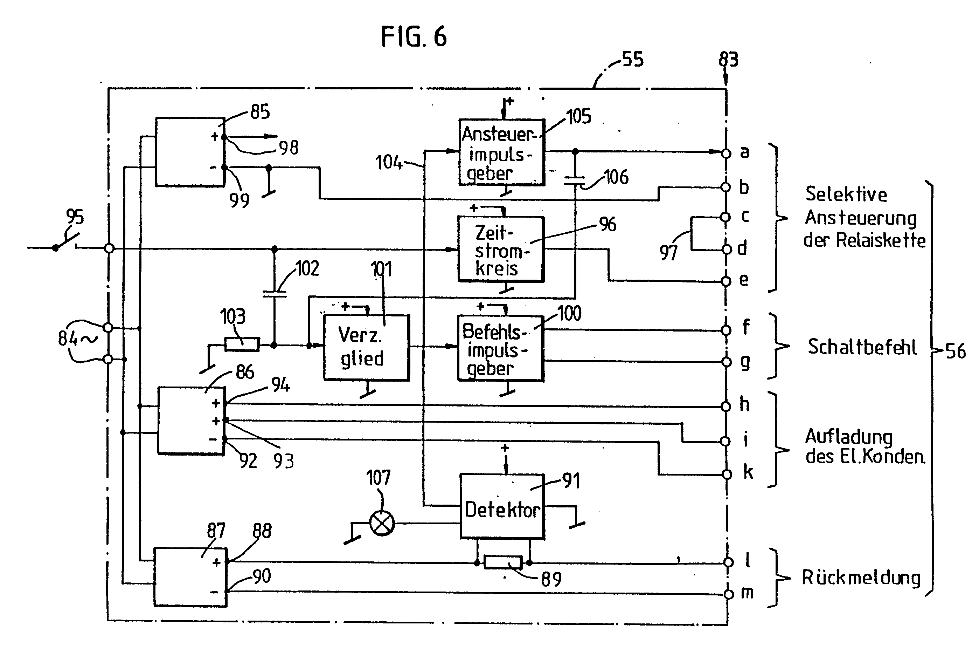

Die Fig. 6 zeigt das vereinfachte Blockschema der Steuereinrichtung 55. Sie umfasst Ausgangsklemmen 83a bis 83m, an welche die Adern des Steuerkabels 56 angeschlossen werden. Ueber Anschlussklemmen 84 können drei Gleichrichter 85, 86 und 87 an die Netzspannung angeschlossen werden. Zum Vermeiden von Störspannungen bzw. Störströmen sind die Gleichstromseiten der Gleichrichter galvanisch voneinander getrennt. Der Gleichrichter 87 liefert eine Ausgangsspannung konstanter Grösse, und die Ausgangsklemme 88 ist über einen Messwiderstand 89 mit der Ausgangsklemme 83l verbunden. Die andere Ausgangsklemme 90 des Gleichrichters 87 ist direkt mit der Ausgangsklemme 81m verbunden. Der Eingang eines Detektors 91 ist parallel zum Messwiderstand 89 geschaltet, so dass der Detektor 91 aufgrund des durch den Messwiderstand 89 fliessenden Stromes, der vom Vorwiderstand 82 der betreffenden Steuerschaltung 51 abhangig ist, feststellen kann, welches Sprühventil 48 richtig arbeitet.

Der Gleichrichter 86 besitzt drei Ausgangsklemmen 92, 93 und 94. Die Ausgangsklemme 92 ist die negative Ausgangsklemme, die mit der Ausgangsklemme 83k der Steuereinrichtung 55 verbunden ist. Die positive Ausgangsklemme 93 liefert eine Gleichspannung von beispielsweise 24 V und ist mit der Ausgangsklemme 83i der Steuereinrichtung 55 verbunden. Mit dieser Spannung werden die Elektrolytkondensatoren 70 in den Steuerschaltungen 51 über die Widerstände 72 und die Dioden 73 aufgeladen. Der Gleichrichter 86 umfasst weiter einen Stromregler, der über die positive Ausgangsklemme 94 einen konstanten Gleichstrom abgeben kann, welche Ausgangsklemme 94 mit der Ausgangsklemme 83h der Steuereinrichtung 55 verbunden ist. Dieser konstante Strom wird jeweils über die Diode 74 und den geschlossenen Arbeitskontakt 64 der erregten Wicklung 78 als Haltestrom zugeführt.

Ueber einen Schalter 95 kann die Steuereinrichtung 55 in Betrieb gesetzt werden. Der Schalter 95 kann manuell oder beispielsweise mittels einer in der CH-Patentschrift Nr. 613 546 beschriebenen Einrichtung zum Erzeugen eines Vorwarnsignals, wenn Eisbildungsgefahr auf einer Fahrbahn besteht, betätigt werden. Das Schliessen des Schalters 95 bewirkt, dass ein Zeitstromkreis 96 eingeschaltet wird, welcher danach während einer vorbestimmten Zeit eine positive Spannung an die Ausgangsklemme 83e der Steuereinrichtung 55 anlegt. Weil die Ausgangsklemme 83e über den ersten Abschnitt des Steuerkabels 56 mit der Eingangsklemme 58e der benachbarten Steuerschaltung 51 verbunden ist, gelangt die Spannung über alle nachfolgenden Steuerschaltungen 51 bis zur Ausgangsklemme 59e der letzten Steuerschaltung 51 und über die weiter oben genannte Verbindung zur Ausgangsklemme 59d der letzten Steuerschaltung 51. Von dieser Ausgangsklemme 59d gelangt die Spannung jeweils über den Umschaltkontakt 62 jeder der Steuerschaltungen 51 zurück zur Eingangsklemme 58d der ersten bzw. der Steuereinrichtung benachbarten Steuerschaltung 51 und über die entsprechende Ader des ersten Abschnittes des Steuerkabels 56 zur Ausgangsklemme 83d der Steuereinrichtung 55. Von der Ausgangsklemme 83d der Steuereinrichtung 55 gelangt die Spannung über eine Brücke 97 zur Ausgangsklemme 83c und von da über den ersten Abschnitt des Steuerkabels 56 zur Eingangsklemme 58c der ersten Steuerschaltung 51 und über die Diode 65 zum Relais 60.

Die oben genannte Spannung wird vom Gleichrichter 85 geliefert, dessen positive Anschlussklemme 98 unter anderem an dem Zeitstromkreis 96 angeschlossen ist. Die negative Ausgangsklemme 99 des Gleichrichters 85 ist mit der Ausgangsklemme 83b der Steuereinrichtung 55 verbunden und über den ersten Abschnitt des Steuerkabels 56 mit der Eingangsklemme 58b der ersten Steuerschaltung 51 und somit mit dem anderen Anschluss aller Relais 60 verbunden. Wenn der Zeitstromkreis 96 eingeschaltet wird, so hat dies zur Folge, dass das Relais 60 der ersten Steuerschaltung 51 erregt wird und sich danach über den Umschaltkontakt 62 selbst haltet. Das Erregen des Relais 60 hat weiter zur Folge, dass dessen Arbeitskontakte 63 und 64 schliessen. Dies bewirkt, dass der Optokoppler 67 zum Empfang eines von einem Befehlsimpulsgeber 100 der Steuereinrichtung 55 erzeugten Schaltbefehls vorbereitet wird. Der Befehlsimpulsgeber 100 wird durch ein Verzögerungsglied 101 gesteuert, dessen Eingang über einen Kondensator 102 mit dem Eingang des Zeitstromkreises 96 verbunden ist. Der Kondensator 102 bildet zusammen mit einem Widerstand 103 ein Differenzierglied, so dass das Verzögerungsglied 101 angesteuert wird, wenn am Eingang des Zeitstromkreises 96 ein schneller, durch das Schliessen des Schalters 95 bewirkter, Spannungsanstieg stattfindet. Nach kurzzeitiger Verzögerung wird der Befehlsimpulsgeber 100, der ein monostabiles Flip-Flop sein kann, angestossen und dementsprechend ein Schaltbefehl an die Anschlussklemmen 83f und 83g abgegeben. Das den Schaltbefehl darstellende Signal gelangt über den geschlossenen Arbeitskontakt 63 zur Leuchtdiode 69 in der Steuerschaltung 51, dessen Relais 60 erregt ist. Durch die von der Leuchtdiode 69 ausgehenden Lichtstrahlen wird der Photothyristor 76 angestrahlt und leitend gemacht. Jetzt kann sich der Elektrolytkondensator 70 über die Wicklung 78 entladen, wodurch das zugeordnete Sprühventil 48 geöffnet wird. Der vom Befehlsimpulsgeber 100 erzeugte Schaltbefehl dauert nur solange, bis der Elektrolytkondensator 70 etwa zur Hälfte entladen ist. Durch das Verzögerungsglied 101 wird das Anstossen des Befehlsimpulsgebers 100 um mindestens die Anzugszeit des Relais 60 verzögert, um Fehlschaltungen zu vermeiden.

Wenn der Detektor 91 feststellt, dass der betreffende Rückmeldekontakt 54 geschlossen ist, meldet er dies über einem Leiter 104 einem Ansteuerimpulsgeber 105. Der Ansteuerimpulsgeber 105 umfasst einen nicht näher dargestellten Zeitstromkreis, der nach Ablauf einer bestimmten Zeit, während welcher aus dem betreffenden Sprühkopf 30 (Fig. 4) das Taumittel auf die Fahrbahn gesprüht wird, einen Steuerimpuls abgibt, welcher der Ausgangsklemme 83a der Steuereinrichtung 55 zugeführt wird. Von da aus gelangt der Ansteuerungsimpuls über den ersten Abschnitt des Steuerkabels 56 zur Eingangsklemme 58a der ersten Steuerschaltung 51 und über den umgelegten Umschaltkontakt 61 zur Ausgangsklemme 59c der ersten Steuerschaltung 51 und über den zweiten Abschnitt des Steuerkabels 56 zur Eingangsklemme 58c der zweiten Steuerschaltung 51 und die Diode 65 zum Relais 60 der zweiten Steuerschaltung 51. Deshalb wird dieses Relais 60 erregt. Die Umschaltkontakte 61 und 62 des Relais 60 werden umgelegt und die Arbeitskontakte 63 und 64 dieses Relais werden geschlossen. Das Umlegen des Umschaltkontaktes 62 des Relais 60 der zweiten Steuerschaltung 51 hat zur Folge, dass die Selbsthaltung des Relais 60 der ersten Steuerschaltung unterbrochen wird und somit das Relais 60 der ersten Steuerschaltung abfällt.

Durch das Abfallen des Relais 60 der ersten Steuerschaltung 51 werden die betreffenden Arbeitskontakte 63 und 64 geöffnet, wodurch der Optokoppler 67 von der Eingangsklemme 58g bzw. der Ausgangsklemme 59g der Steuerschaltung 51 abgetrennt wird und der Photothyristor 76 durch Abschalten der positiven Spannung an einer Anode gesperrt wird bis die Leuchtdiode 69 ein weiteres Mal aufleuchtet. Der vom Ansteuerimpulsgeber 105 erzeugte Ansteuerimpuls wird auch über einem Kondensator 106 dem Eingang des Verzögerungsgliedes 101 zugeführt. Deshalb wird aufgrund der Anstiegsflanke des Ansteuerimpulses ein verzögertes Signal an den Befehlsimpulsgeber 100 weitergegeben, wodurch die weiter oben beschriebene Weise der Optokoppler 67 der zweiten Steuerschaltung 51 angesteuert und das Relais 60 der zweiten Steuerschaltung 51 erregt wird. Solange dieses Relais 60 erregt ist, besprüht der Sprühkopf 30 (Fig. 4) der zweiten Steuerschaltung 51 den diesem Sprühkopf zugeordneten Abschnitt der Fahrbahn. Der oben genannte Zeitstromkreis des Ansteuerimpulsgebers 105 bestimmt wiederum die Zeit während welcher das Relais 60 angezogen bleibt. Nach Ablauf dieser Zeit sendet der Ansteuerimpulsgeber 105 einen weiteren Impuls zur Ausgangsklemme 83a und über den ersten Abschnitt des Steuerkabels 56 zur Eingangsklemme 58a der ersten Steuerschaltung 51 und über den Umschaltkontakt 61 zur Ausgangsklemme 59a der ersten Steuereinrichtung 51 und über den zweiten Abschnitt des Steuerkabels 56 zur Eingangsklemme 58a der zweiten Steuerschaltung 51 und über den umgelegten Umschaltkontakt 61, die Ausgangsklemme 59c der zweiten Steuerschaltung 51, den dritten Abschnitt des Steuerkabels, die Eingangsklemme 58c der dritten Steuerschaltung 51 und über die Diode 65 zum Relais 60 der dritten Steuerschaltung 51. Somit wird dieses Relais 60 erregt und wird durch den ihm zugeordneten Umschaltkontakt 62 gehalten und die Selbsthaltung des Relais 60 der zweiten Steuerschaltung 51 durch den eben genannten Umschaltkontakt 62 uunterbrochen und das Relais 60 der zweiten Steuerschaltung 51 fällt ab, was bewirkt, dass das Sprühventil 48, welches der zweiten Steuerschaltung 51 zugeordnet ist, schliesst. Der vom Ansteuerimpulsgeber erzeugte Impuls wird über den Kondensator 106 auch dem Verzögerungsglied 101 zugeführt, so dass nach einer kurzen Verzögerungszeit der Befehlsimpulsgeber 100 wie oben beschrieben einen Schaltbefehl erzeugt, wodurch das Magnetventil des der dritten Steuerschaltung 51 zugeordneten Sprühventils erregt wird. Ueber den zugeordneten Rückmeldekontakt 54 wird der Vorwiderstand 82 zugeschaltet und der Detektor 91 stellt fest, welches Sprühventil richtig arbeitet.

Der oben beschriebene Vorgang wiederholt sich bis das der letzten Steuerschaltung 51 zugeordnete Sprühventil 48 betätigt worden ist. Der Zeitstromkreis 96 ist so eingestellt, dass er die an die Ausgangsklemme 81e der Steuereinrichtung 55 angelegte Spannung abschaltet, nachdem das der letzten Steuerschaltung 51 zugeordnete Sprühventil 48 richtig gearbeitet hat.

Wird der Schalter 95 neuerdings betätigt, so laufen die oben beschriebenen Vorgänge automatisch nochmals ab und die Fahrbahn wird erneut mit dem Taumittel besprüht, wobei zur gleichen Zeit jeweilen nur einer der Sprühköpfe 30 (Fig. 4) Taumittel auf die Fahrbahn sprüht.

Der Detektor 91 ist so ausgebildet, dass er, wenn nicht rechtzeitig ein Rückmeldesignal bei ihm eintrifft nachdem der Befehlsimpulsgeber einen Schaltbefehl erzeugt hat, ein Alarmsignal erzeugt. Dies ist durch eine Alarmlampe 107 symbolisch angedeutet. Damit der Detektor feststellen kann, wann ein Schaltbefehl erzeugt worden ist, wird der Ausgang des Befehlsimpulsgebers 100 mit einem Eingang des Detektors 91 verbunden.

Mit der oben beschriebenen Anlage können besonders gefährdete Strassenfahrbahnabschnitte automatisch mit einem Taumittel besprüht werden. Dadurch wird die Sicherheit des Verkehrs wesentlich gesteigert.

**Patentansprüche**

1. Anlage zum Sprühen von einem flüssigen Taumittel auf eine Strassenfahrbahn, mit einer längs der Fahrbahn angeordneten Druckleitung (47) für das flüssige Taumittel, einer Pumpe (46) zum Fördern des Taumittels aus einem Behälter (45) in die Druckleitung, einer Steuereinrichtung (55) zum Steuern der Pumpe und über ein längs der Fahrbahn angeordnetes Steuerkabel (56) angeschlossene Sprühventile (48), dadurch gekennzeichnet, dass jedem der Sprühventile eine Steuerschaltung (51) zugeordnet ist, dass jede der Steuerschaltungen über das genannte Steuerkabel mit der Steuereinrichtung verbunden ist, dass das Steuerkabel unabhängig von der Anzahl der Sprühventile höchstens zwölf Adern enthält, dass jede Steuerschaltung höchstens zwölf Eingangsklemmen (58a - 58m) zum Anschliessen eines ankommenden Abschnittes des Steuerkabels und höchstens zwölf Ausgangsklemmen (59a - 59m) zum Anschliessen eines abgehenden Abschnittes des Steuerkabels aufweist, dass jede Steuerschaltung ein Relais (60) mit zwei Umschaltkontakten (61, 62) und einen Arbeitskontakt (63) aufweist, dass die Umschaltkontakte im nicht erregten Zustand des Relais je eine der Eingangsklemmen (58a bzw. 58d) mit einer der Ausgangsklemmen (59a bzw. 59d) verbinden und im erregten Zustand des Relais die eine der genannten Eingangsklemmen über eine Diode (66) mit einem Anschluss des Relais und die eine der genannten Ausgangsklemmen mit dem genannten Anschluss des Relais verbindet, und dass die über die fünf ersten Adern der Abschnitte des Steuerkabels (56) verbundenen Eingangs- bzw. Ausgangsklemmen (58a - 58d, 59a - 59d) der Steuerschaltungen zusammen mit den Relais (60) eine selektiv steuerbare Relaiszählkette bilden.

2. Anlage nach Anspruch 1, dadurch gekennzeichnet, dass jede Steuerschaltung einen über das Steuerkabel aufladbaren Kondensator (70) und ein durch den Arbeitskontakt (63) steuerbares Schaltmittel (67) zum Anschalten des Kondensators an die Wicklung (78) eines Elektromagneten des Sprühventils aufweist.

3. Anlage nach Anspruch 2, dadurch gekennzeichnet, dass jedes der Relais (60) einen weiteren Arbeitskontakt (64) aufweist, dass das Schaltmittel ein Optokoppler (67) ist, dass der weitere Arbeitskontakt in Reihe zum Empfängerkreis des Optokopplers geschaltet ist und zum Zuführen eines Erreger- und Haltestromes zur genannten Wicklung über eine Diode (75 bzw. 74) dient, und weiter an eine (58h) der Eingangsklemmen angeschlossen ist, die mit einer (59h) der Ausgangsklemmen verbunden ist, und dass der Sender (69) des Optokopplers über den weiteren Arbeitskontakt (63) zum Steuern des Optokopplers mit zwei (58f, 58g) der Eingangsklemmen, die mit zwei (59f, 59g) der Ausgangsklemmen verbunden sind, anschliessbar ist.

4. Anlage nach Anspruch 1, 2,oder 3, dadurch gekennzeichnet, dass zwei (58l, 58m) der Eingangsklemmen mit zwei (59l, 59m) der Ausgangsklemmen verbunden sind, dass ein Rückmeldekontakt (54) des Sprühventils mit der einen der genannten zwei Eingangsklemmen und über einen Widerstand (82) mit der anderen der zwei genannten Eingangsklemmen verbunden ist, und dass der genannte Widerstand jeder der Steuerschaltungen einen anderen Wert aufweisen kann.

5. Anlage nach Anspruch 4, dadurch gekennzeichnet, dass die Steuereinrichtung (55) einen Detektor (91) aufweist zum Feststellen, welche der Steuerschaltungen ihr zugeordnetes Sprühventil betätigt hat.

6. Anlage nach einem der Ansprüche 1, 2, 3, 4 oder 5, dadurch gekennzeichnet, dass in jedem Sprühventil (48) eine auf die Strömung des flüssigen Taumittels ansprechende Vorrichtung (22, 23, 25; 37, 39, 41) mit einem Schalter (28; 42) angeordnet ist, welch letzterer geschlossen ist, wenn das flüssige Taumittel durch das geöffnete Sprühventil fliesst, und dass entweder die Vorrichtung (22, 23, 25) im Ausgangskanal (4) und der Schalter (28) im Bereich des Ausgangskanals angeordnet sind, dass die Vorrichtung (22, 23, 25) im Eingangskanal (3) und der Schalter (28) im Bereich des Ausgangskanals angeordnet sind, oder dass die Vorrichtung (37, 39, 41) im Nebenkanal (12 - 15) und der Schalter (42) im Bereich des Nebenkanals angeordnet sind.

7. Anlage nach Anspruch 6, dadurch gekennzeichnet, dass die Vorrichtung einen zylindrischen Körper (22; 37) mit einer zentralen Aussparung (24; 40), einen in der Wand des Körpers eingebetteten Dauermagnet (25, 41) und ein Federorgan (23; 39) umfasst, und der Schalter ein in einer Bohrung (27; 43) in einer Gehäusewand (26; 33; 44) angeordneter Schutzrohrkontakt (28; 42) ist.

8. Anlage nach Anspruch 7, dadurch gekennzeichnet, dass der Durchtrittsquerschnitt der Aussparung im zylindrischen Körper kleiner ist als der Durchtrittsquerschnitt des Kanals, in dem der Körper verschiebbar angeordnet ist, und dass der zylindrische Körper und das Federorgan so angeordnet sind, dass sich der Körper entgegen der Rückführkraft des Federorganes bewegt, wenn eine Strömung der Flüssigkeit durch den Kanal auftritt, in dem der Körper angeordnet ist.

**Claims**

1. Installation for spraying a liquid thawing agent on a roadway, having a pressure line (47) disposed along the roadway for the liquid thawing agent, pump (46) for conveying the thawing agent from a container (45) into the pressure line, a control arrangement (55) for controlling the pump, and spray valves (48) connected over a control cable (56) disposed along the roadway, characterized in that a control circuit (51) is associated with each of the spray valves, that each of the control circuits is connected to the control arrangement over the said control cable, that the control cable contains at most twelve wires independently of the number of spray valves, that each control circuit has at most twelve input terminals (58a-58m) for connecting an incoming section of the control cable and at most twelve output terminals (59a-59m) for connecting a outgoing section of the control cable, that each control circuit comprises a relay (60) having two two-way contacts (61, 62) and an operating contact (63), that the two-way contacts each connect, in the non-energized state of the relay, one of the input terminals (58a and 58d) to one of the output terminals (59a and 59d, respectively) and, in the energized state of the relay, one of the said input terminals via a diode (66) to a terminal of the relay and one of the said output terminals to the said terminal of the relay, and that the input and output terminals (58a-58d, 59a-59d) of the control circuits connected over the first five wires of the sections of the control cable (56) form together with the relays (60) a selectively controllable relay meter chain.

2. Installation according to claim 1, characterized in that each control circuit has a capacitor (70) chargeable over the control cable and a switching means (67) controllable by the operating contact (63) for connecting the capacitor to the winding (78) of an electromagnet of the spray valve.

3. Installation according to claim 2, characterized in that each of the relays (60) has a further operating contact (64), that the switching means is an opto-electronic coupler (67), that the further operating contact is connected in series to the receiver circuit of the opto-electronic coupler and serves the purpose of supplying an exciting and holding current to the said winding via a diode (75 and 74, respectively), and is further connected to one (58h) of the input terminals which is connected to one (59h) of the output terminals, and that the transmitter (69) of the opto-electronic coupler is connectible via the further operating contact (63), for controlling the opto-electronic coupler, to two (58f, 58g) of the input terminals which are connected to two (59f, 59g) of the output terminals.

4. Installation according to claim 1, 2, or 3, characterized in that two (58l, 58m) of the input terminals are connected to two (59l, 59m) of the output terminals, that a revertive-signal contact (54) of the spray valve is connected to one of the said two input terminals and across a resistor (82) to the other of the two said input terminals, and that the said resistor of each of the control circuits can have another value.

5. Installation according to claim 4, characterized in that the control arrangement (55) has a detector (91) for ascertaining which of the control circuits has operated its associated spray valve.

6. Installation according to one of the claims 1, 2, 3, 4, or 5, characterized in that in each spray valve (48) there is disposed a device (22, 23, 25; 37, 39, 41) responsive to the flow of the liquid thawing agent, having a switch (28; 42) which is closed when the liquid thawing agent flows through the open spray valve, and that either the device (22, 23, 25) is disposed in the outlet duct and the switch (28) in the region of the outlet duct, or the device (22, 23, 25) is disposed in the inlet duct (3) and the switch (28) in the region of the outlet duct, or the device (37, 39, 41) is disposed in the bypass (12-15) and the switch (42) in the region of the bypass.

7. Installation according to claim 6, characterized in that the device comprises a cylindrical body (22; 37) having a central passage (24; 40), a permanent magnet (25, 41) embedded in the wall of the body, and a spring member (23; 39), and the switch is a reed contact (28; 42) disposed in a bore (27; 43) in a housing wall (26; 33; 44).

8. Installation according to claim 7, characterized in that the crosssectional area of the passage in the cylindrical body is smaller than the cross-sectional area of the duct in which the body is slidingly disposed, and that the cylindrical body and the spring member are so disposed that the body moves against the return force of the spring member when a flow of the liquid occurs through the duct in which the body is disposed.

**Revendications**

1. Installation pour la pulvérisation d'un produit à dégeler liquide sur une voie de tramway, avec une conduite sous pression (47) pour le produit à dégeler liquide disposée le long de la voie, une pompe (46) pour le refoulement du produit à dégeler dans la conduite sous pression à partir d'un récipient (45), un dispositif de commande (55) pour la commande de la pompe et des soupapes de pulvérisation (48) connectées à un câble de commande (56) disposé le long de la voie, caractérisé en ce qu'un circuit de commande (51) est associé à chaque soupape de pulvérisation, que chacun des circuits de commande est relié avec le dispositif de commande par le dit câble de commande, que le câble de commande contient au plus douze brins, indépendemment du nombre de soupapes de pulvérisation, que chaque circuit de commande comporte au plus douze bornes d'entrée (58a - 58m) pour la connexion d'un tronçon aboutissant du câble de commande et au plus douze bornes de sortie (59a - 59m) pour la connexion d'un tronçon partant d'un câble de commande, que chaque circuit de commande comporte un relais (60) avec deux commutateurs (61, 62) et un contact de travail (63), que les commutateurs relient chaque fois l'une des bornes d'entrée (58a, resp. 58d) avec l'une des bornes de sortie (59a, resp. 59d) lors du stade de non-excitation du relais et relient l'une des dites bornes d'entrée avec une connexion du relais en passant par une diode (66) et l'une des dites bornes de sortie avec la dite connexion du relais, lors du stade d'excitation du relais, et que les bornes d'entrée, resp. de sortie du circuit de commande (58a-58d, 59a-59d) reliées par l'intermédiaire des cinq premières brins de tronçons du câble de commande (56) forment ensemble avec le relais (60) une chaîne de comptage à relais pouvant être commandée sélectivement.

2. Installation selon la revendication 1, caractérisée en ce que chaque circuit de commande comporte un condensateur (70) pouvant être chargé par l'intermédiaire du câble de commande et un système interrupteur (67) commandé par le contact de travail (63) pour la mise en circuit du condensateur avec l'enroulement (78) de l'électro-aimant de la soupape de pulvérisation.

3. Installation selon la revendication 2, caractérisée en ce que chaque relais (60) comporte encore un autre contact de travail (64), en ce que le système-interrupteur est un coupleur optique (67), en ce que le dit autre contact de travail est branché en série au circuit récepteur du coupleur optique et sert à l'acheminement d'un courant excitateur et de maintien par l'intermédiaire d'une diode (75, resp. 74), et est connecté en outre à l'une (58h) des bornes d'entrée, qui est reliée avec une (59h) des bornes de sortie, et en ce que l'émetteur (69) du coupleur optique peut être connecté avec deux (58f, 58g) des bornes d'entrée, qui sont reliées à deux (59f, 59g) des bornes de sortie par l'intermédiaire de l'autre contact de travail (63) pour la commande du coupleur optique.

4. Installation selon la revendication 1, 2 ou 3, caractérisée en ce que deux (58l, 58m) des bornes d'entrée sont reliées à deux (59l, 59m) des bornes de sortie, en ce qu'un contact de retro-signal (54) de la soupape de pulvérisation est relié avec l'une des dites deux bornes d'entrée et par l'intermédiaire d'une résistance (82) avec l'autre, et en ce que la dite résistance de chacun des circuits de commande peut présenter une autre valeur.

5. Installation selon la revendication 4, caractérisée en ce que le dispositif de commande (55) comporte un détecteur (91) pour déterminer lequel des circuits de commande a mis en action la soupape de pulvérisation correspondante.

6. Installation selon l'une des revendications 1, 2, 3, 4 ou 5, caractérisée en ce qu'à l'intérieur de chaque soupape de pulvérisation (48) un dispositif (22, 23, 25; 37, 39, 41) réagissant à l'écoulement du produit à dégeler liquide est placé avec un interrupteur (28; 42), lequel interrupteur est fermé, lorsque le produit à dégeler liquide s'écoule par la soupape de pulvérisation ouverte, et en ce que soit le dispositif (22, 23, 25) est placé dans le conduit de sortie (4) et l'interrupteur (28) à proximité du conduit de sortie, soit le dispositif (22, 23, 25) est placé dans le conduit d'entrée (3) et l'interrupteur (28) a proximité du conduit de sortie, soit le dispositif (37, 39, 41) est placé dans le conduit voisin (12 - 15) et l'interrupteur (42) à proximité du conduit voisin.

7. Installation selon la revendication 6, caractérisée en ce que le dispositif comprend un corps cylindrique (22, 27) avec un évidement central, (22; 40), un aimant permanent (25, 41) logé dans le flanc du corps et un ressort (23; 39), et l'interrupteur est un contact à tube de protection (28; 42) placé dans un alésage (27, 43) pratiqué dans une paroi de la cage (26; 33; 44).

8. Installation selon la revendication 7, caractérisée en ce que la section de passage de l'évidement dans le corps cylindrique est plus petite que la section du passage du conduit, dans lequel le corps est disposé de façon mobile, et que le corps cylindrique et le ressort sont disposés de telle manière à ce que le corps se déplace contre la force de rappel du ressort lorsqu'un écoulement du liquide se produit à travers le circuit, dans lequel le corps est disposé.

FIG. 1

FIG. 2

FIG. 3

FIG. 4

FIG. 5

FIG. 6

Selektive Ansteuerung der Relaiskette

Schaltbefehl

Aufladung des El.Konden.

Rückmeldung

0 106 796